Europäisches Patentamt

European Patent Office

Office européen des brevets

(11) Publication number: **0 341 022**
**A2**

## EUROPEAN PATENT APPLICATION

(21) Application number: **89304402.4**

(51) Int. Cl.⁴: **F 24 F 11/00**

(22) Date of filing: **02.05.89**

(30) Priority: **03.05.88 CA 565830**

(43) Date of publication of application:
**08.11.89 Bulletin 89/45**

(84) Designated Contracting States:
**AT BE CH DE ES FR GB IT LI NL SE**

(71) Applicant: **Kenet, Ran**
**119 Yorkhill Boulevard**
**Thornhill Ontario L4J 2P5 (CA)**

(72) Inventor: **Kenet, Ran**
**119 Yorkhill Boulevard**
**Thornhill Ontario L4J 2P5 (CA)**

(74) Representative: **Hands, Horace Geoffrey et al**
**GEORGE FUERY & CO Whitehall Chambers 23 Colmore Row**
**Birmingham B3 2BL (GB)**

(54) Room monitoring and control system.

(57) A room monitoring and control system for use in multi-room buildings, such as hotels, institutions, apartments, and also, for example, in passenger ships, has a room information processing unit for each room, a temperature sensor connected to the unit for sensing the temperature in the room, a temperature control means for controlling the temperature in the room and connected to the unit, a person presence sensor in the room and connected to the unit so as automatically to cause the temperature control means to change the temperature to one predetermined value when a person enters the room and to change the temperature to a second predetermined value when a person is not in the room. A central processor is connected to a group of room units to receive information therefrom.

FIG. 1

Bundesdruckerei Berlin

Description

## ROOM MONITORING AND CONTROL SYSTEM

### FIELD OF THE INVENTION

The invention relates to a room monitoring and control system for use in buildings such as institutions, hotels, and apartments, and in passenger ships and the like.

### BACKGROUND OF THE INVENTION

In the operation of buildings such as institutions, hotels, apartments, condominiums, industrial buildings, malls, office buildings, public buildings, terminal buildings, military buildings, and the like, and passenger ships and the like or any other place where persons such as residents, guests, patients, co-workers, visitors, shoppers, travellers, and even intruders, may be present, there are a large number of rooms which at any given moment may or may not be occupied, may or may not require cleaning, and may or may not require heating or cooling and all of which will desirably be monitored for smoke and fire on a security basis.

In the past, some of these functions may have been carried out in hotels by the staff, or by reference to an accounting computer recording check outs and check ins, and by the use of door signs such as "do not disturb". Some of these functions may have been carried out by security personnel, or may have been carried out by essentially independent systems such as fire alarm systems, air conditioning systems, and the like.

Many of these functions, however, could not be performed at all by staff personnel; some other of these functions had never become standard features in the industry because of the complexity of information.

This somewhat haphazard piecemeal series of controls has been in use at least throughout the entire hotel industry, and it is well known to be a cause of problems. For example, the use of door signs is largely ignored by cleaning staff.

Guests frequently forget to hang the sign on the door when it is required. Other guests forget to remove the sign when they leave the room. Because of this. cleaning staff in fact pay little attention to such door signs, because such signs are unreliable. As a result, it is a common experience for a hotel guest to be disturbed by a cleaner who has ignored the sign.

Forcible entry of guest rooms, and assaults on guests in their rooms are not unknown. While the guest may attempt to telephone hotel security, he or she may be unable to reach the telephone in time.

Smoke and fire detectors are available, which may all be wired to a central fire detector panel. Usually however, such systems are "stand alone" systems and do not provide any other information.

One of the problems encountered in all fires is that of removing people to safety as quickly as possible. In order for fire fighters to do this, it is necessary for them to know which rooms are actually occupied at the time and which are not. In the case of hotels, this information cannot be obtained from the front desk. All they can normally identify is those rooms which have been let and those which have not.

Accordingly, it is necessary for firefighters to break all doors of all rooms in the fire zone wasting critical time, in order to check whether whether or not a person is actually there.

Another problem arises in connection with the cleaning status of a room. At any time, while the cleaning staff are working, all check out rooms must be regarded as soiled, until such time as the cleaning staff have reported them to be clean. Guests wishing to check in frequently have to wait until this cleaning report has been received, even though some clean rooms are already available. A further problem sometimes arises in connection with deficiencies in cleaning a room.

When this occurs, it will usually not come to the notice of the hotel staff until a guest has rented the room and then phones down to complain. It is then necessary to find the guest another room, and to send cleaning staff to the first room. This causes a waste of time occupying hotel staff and also causes guest dissatisfaction.

In almost all buildings and facilities, the heating and cooling of the rooms presents a major expense. Where a room is unoccupied, then it is clearly unnecessary to supply the full heating or cooling service. However, for example, in hotels and the like, when a guest has once checked in, the staff must regard the room as occupied and maintain it at its appropriate temperature regardless of whether the guest is actually present in the room.

For all of these reasons, it is clearly desirable to provide a room monitoring and control system which will continuously receive and update a variety of different information from each room and report it to a central computer, which can then be monitored by the staff, for whatever information they require at any moment. In this way, the facility will be operated at a much higher level of efficiency, and can thus earn more money, create greater comfort and greater safety, and save substantially on heating and air conditioning and minimize administrative costs.

### SUMMARY OF THE INVENTION

With a view to overcoming the various disadvantages and problems noted above, the invention comprises a room monitoring and control system for use in a multi-room facility and which comprises (a) for each room, a room information processing unit, a temperature-sensing means connected to said room information processing unit for sensing the temperature in said room, a temperature control means connected to said room information processing unit for controlling the temperature of said room, and a person presence-sensing means connected to said room information processing unit and adapted to provide a "person presnt" signal or a "person absent" signal thereto, said room information processing unit being responsive to a "person present" signal to cause said temperature control means to change the temperature in said room to a predetermined first value and being responsive to a "person absent" signal to cause said temperature control means to change the temperature in said room to a predetermined second value, and (b) a central processing means adapted to be connected to a plurality of said room information processing units for receiving information from each said unit.

More particularly, it is an objective of the invention to provide a room information unit having the foregoing advantages and further including heat sensing means adapted to respond to excessive heat or a sudden rise in temperature to provide a "fire" signal to said unit, said unit, in turn, being adapted to supply a "fire" signal to said central processing means.

More particularly, it is an objective of the invention to provide a room information unit having the foregoing advantages and further including test means for testing said heat-sensing means, and adapted to send a test signal to said unit, and said unit being adapted to send a repeat test signal to said testing means at regularly timed intervals, and said unit being adapted to send said test signals to said central processing means.

More particularly, it is an objective of the invention to provide a room information unit having the foregoing advantages and further being adapted to sense cleaning activity, and to send a "clean", and/or "inspected" signal to said unit, said unit in turn sending a "clean" and/or "inspected" signal to said central processing means.

More particularly, it is an objective of the invention to provide a room information unit having the foregoing advantages and further incorporating door-sensing means operable in response to forcible entry, to send a forcible entry signal to said unit, said unit in turn sending a forcible entry signal to said central processing means.

More particularly, it is an objective of the invention to provide a room information processing unit wherein said unit further incorporates a room temperature setting control, and memory means for storing information from said room temperature setting control whereby a person may set a predetermined desired temperature, said memory means re-setting said desired temperatures each time the person re-enters the room.

More particularly, it is an objective of the invention to provide a room information unit having the foregoing advantages, and further comprising a speaker adapted to be mounted in said room, said speaker being connected to said unit for alerting persons to an emergency for example.

The various features of novelty which characterize the invention are pointed out with more particularity in the claims annexed to and forming a part of this disclosure. For a better understanding of the invention, its operating advantages and specific objects attained by its use, reference should be had to the accompanying drawings and descriptive matter in which there are illustrated and described preferred embodiments of the invention.

## BRIEF DESCRIPTION OF THE DRAWINGS

Figure 1 is a schematic illustration of a typical room in a multi-room facility, showing the room information processing unit mounted on the wall, together with various sensors suitably positioned;

Figure 2 is a schematic block diagram showing the system as installed in a facility and including a single room information unit, and the central processing system, and a plurality of sensors, and,

Figure 3 is a schematic block diagram showing a room information unit as it is actually made, incorporating a number of different sensors and functions in a single unit.

## DESCRIPTION OF A SPECIFIC EMBODIMENT

Before describing the drawings, it will be recalled that the invention is applicable to multi-room facilities of a wide variety of different types with only minor modifications. The particular embodiment described and illustrated here is for use in relation to hotel guest facilities. It will however be appreciated that the invention is not limited solely to use in hotels.

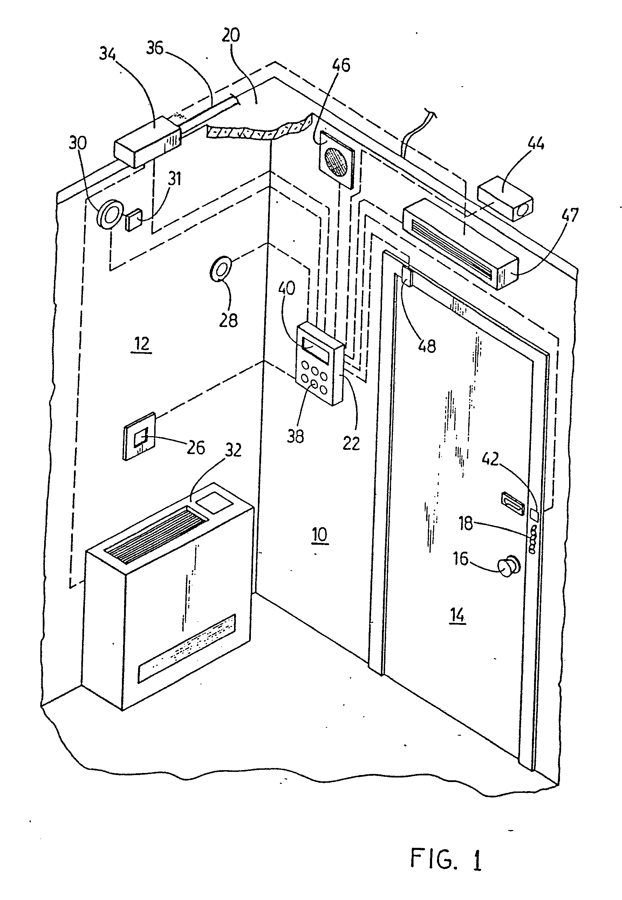

Referring now to Figure 1, there is shown in this drawing in schematic form a typical room in, for example, a hotel. The drawing illustrates only two walls indicated as 10 and 12. In the wall 10 a door 14 is located, having a door handle 16 and a security chain 18.

A portion of the ceiling 20 is shown at the upper edge of walls 10 and 12.

The individual room information processing unit is indicated generally as 22. Typically this would be located at a convenient height on a wall where it is accessible to guests. In the present case, it is shown mounted on wall 10 beside the door, but clearly it could be anywhere in the room.

The unit 22 is connected to central computer facilities within the hotel.

The function of the unit 22 is to receive and process information from various different sensors to be described in detail.

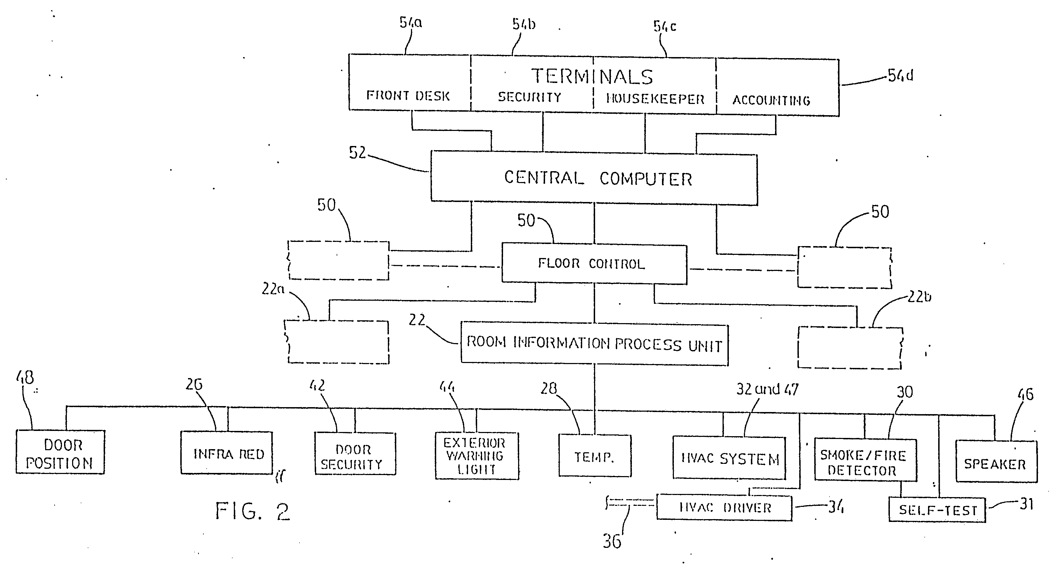

The unit 22 is illustrated in Figures 1 and 2 in essentially schematic form with the various sensors shown, purely for the purposes of illustration and ease of understanding, at different locations in the room.

In practice, however, the unit is actually fabricated so as to incorporate most of the different sensors and functions within the unit itself. It will be appreciated, however, that to illustrate such a unit incorporating so many different functions and sensors, in illustrations on the scale of Figures 1 and 2, would lead to a lack of clarity as to the actual functions being performed.

For this reason, therefore, Figures 1 and 2 illustrate many of the sensors as being located away from the unit, although in actual use they will be located within it.

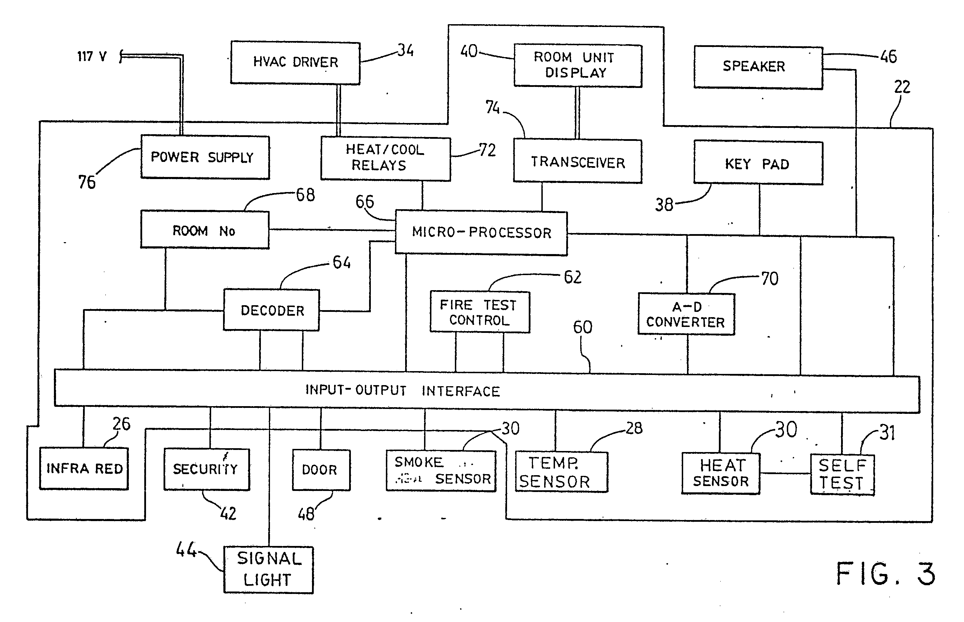

The arrangement of the room information processing unit 22, as it would be fabricated and installed, is illustrated schematically in Figure 3.

A person presence sensor 26 is illustrated, mounted in wall 12 in this particular embodiment, and is connected to unit 22. Conceivably, in a suite of rooms there could be one such sensor (or unit) in each room.

Sensor 26 is of a type well known in the art, and functions in response to infra-red radiation received from a person. When a person enters the room, the body heat will radiate as infra-red radiation which will be detected by sensor 26. Sensor 26 will then send a "person present" signal to the unit 22.

When the person leaves, and there is no longer infra-red stimulation of the sensor 26; it will then send a "person absent" signal to the unit 22. This signal may, however, merely be no signal at all.

A room temperature sensor 28 is illustrated in this embodiment as being mounted in wall 12. It is also connected to unit 22. It is merely a conventional thermal response device of any type known in the art, sending information concerning the temperature within the room to the unit 22.

For simplicity of explanation, the temperature sensor 28 is shown separate from the unit 22. In practice, however, for ease of installation and manufacture, the temperature sensor will be incorporated in the unit 22 itself, as explained above. While only one such temperature sensor is shown, two such temperature sensors may be incorporated in the unit for the sake of reliability. The unit logic will then repeatedly check the reading of each temperature sensor and compare them.

A heat and smoke detector 30 for detecting smoke and/or five is also shown in this embodiment mounted in wall 12 although it could be mounted in any other location. It responds to an excessive temperature or to smoke within the room to send a "fire" signal to unit 22. Heat/smoke detector 30 incorporates its own self-tester 31, to periodically test its operation. Separate heat and smoke detectors can also be used and, in such a case, the smoke detector would normally be mounted at an elevated position, for example, on the ceiling 20, and not in the unit 22.

Such testing is carried out at regular timed intervals on instructions received from unit 22. Upon the test being completed, and a report having been received in unit 22, unit 22 will then relay that signal to the central computer facilities described below. Such testing can be carried out as frequently as every thirty minutes. Possibly, in a very large facility the interval might be required to be somewhat longer.

In this way, the security staff in the facility can continuously check the state of the heat sensors in each of the rooms.

The heat detector 30 may also be another form of temperature sensor which responds to the rate of rise in temperature. A sudden or abnormal rate of rise of temperature will cause the heat detector 30 to trigger a signal. In this case, such a heat detector can also be incorporated in the unit 22 itself.

A heat exchanger 32 is shown mounted on wall 12, although it may be in any suitable location in the room, and is often located below a window, or may be in the ceiling, as part of the ventilation system (not shown). The heat exchanger 32 provides a means for maintaining a desired temperature and is adapted to either heat the room in cold weather or cool it in hot weather.

It will, of course, be appreciated that the illustration of a typical window type heat exchanger 32 is purely for the sake of illustration. Facilities may be heated and cooled in a wide variety of different ways and may incorporate heat exchangers in air circulation systems or may incorporate separate air circulation systems.

The heat exchanger 32 will incorporate various valves and controls of a type known per se. In order to monitor these controls and valves, suitable sensors (not shown) will be provided and connected to unit 22.

In addition, in order to control the power supply to the heat exchanger 32, a HVAC driver 34 is provided, typically being located above the ceiling 20. Driver 34 is provided with its own power supply cable 36 connected to the mains power supply in the facility. It is also connected to unit 22 so that it can be controlled and operated by unit 22.

The driver 34 operates to cause a temperature change or "set-back" upon receiving a signal from unit 22 that there is no person present in the room. Upon a person entering the room, unit 22 will command driver 34 to cause the temperature to change to a first predetermined desired room temperature.

Unit 22 incorporates a temperature setting digital panel or pad 38. The panel 38 is of the digital type, and has a numerical display 40.

In order to detect a forcible entry of the room, a detector switch 42 is shown incorporated in the safety chain 18. Assuming the safety chain has been set, then upon a forcible entry being made it will send a "forcible entry" signal to unit 22.

In order to alert the cleaning personnel or their staff to the presence or absence of a guest in the room, a signal light indicated generally as 44 is shown mounted in the ceiling outside the door 14.

Typically this will provide, for example, a coloured warning light, for example red, when a guest is present in the room. A different coloured light, for example, green may be displayed when the room is vacant.

The signal light 44 would be activated only in two conditions. In the first place, in the event of an emergency such as a fire, suitable programming will cause the units 22 to light up their signal lights 44 if a person is present in a room.

This will then enable firemen and hotel personnel to determine immediately which rooms are actually occupied by guests, in the event of an emergency, and they can then be sure to awaken each person. It will not be necessary to break down doors and enter rooms where no persons are, in fact, present.

Signal lights 44 are also required to be observed by the cleaning staff. For this purpose, the cleaning staff will be provided with a device which can signal the unit 22 to momentarily activate the light. Such a device may be a simple wall mounted key-operated switch. It may also be a small hand-held radio transmittor, or some other device suitable for the purpose.

In order to provide an alarm to guests, for example in an emergency, a speaker indicated as 46 is shown mounted here in the ceiling, although in fact it would be incorporated as part of unit 22. It is shown in this embodiment separate from unit 22, and is connected thereto.

Referring once again to the temperature setting panel 38, the digital display 40 may be of the type which provides a continuous readout of the actual temperature in the room. When a person wishes to set a different temperature, he merely keys in the temperature he desires and presses an appropriate reset button or code. This new temperature is then stored in the memory of unit 22. Thus each time the person returns to his room after an absence, the "person present" signal will cause the temperature of the room to be adjusted to a first predetermined value temperature as set by that person.

Upon a hotel guest checking out, the central computer will automatically send a check-out signal to unit 22, which 22 will re-set its memory to the standard hotel set back temperature and room temperature for that time of year.

Also illustrated in Figure 1 is an air ventilation circulating unit 47. It will be appreciated that in many facilities the heat exchanger 32 and the air circulation unit 47 may be incorporated in the same installation. They are illustrated here separately, merely for the sake of convenience in explanation. Typically, the air circulation system will incorporate a fan for drawing fresh air from the corridor into the room. The motor (not shown) of the air circulation system will be connected to the HVAC driver 34, and will incorporate a sensor (not shown) connected with unit 22, in order to monitor its condition. In the event of a fire, the unit 22 would instruct the HVAC driver 34 to shut down the motor in the circulation unit 47, so as to cut off ventilation to the fire.

In order to detect the normal operation of the door for entry and exit purposes, a door position switch 48 is provided in the door frame, and is activated simply by opening and closing of the door. Door switch 48 is also connected to unit 22.

Referring now to Figure 2, the invention is there illustrated showing a room information processing unit indicated generally at 22, and showing the various sensors associated therewith. The other room information processing units are shown at 22a and 22b.

The room unit 22 is connected to a floor control 50, which is in turn connected to a central processing means or computer 52. While only three such room units 22, 22a and 22b are shown in this illustration there will of course be one such unit for each room, and each of the units on a given floor will be connected to their respective common floor control unit 50. Floor control units 50 are in turn connected to the central computer 52, so that in fact there will be the entire network of units 22 connected to the central computer 52.

For reasons of reliability and safety, the floor control units 50 may also have auxiliary connections indicated in phantom, to adjacent floor control units. Thus, if for example, the cable connecting any one floor control unit 50 to the central computer 52 were to fail, or be destroyed by fire, then the information from that floor control unit would be relayed through to an adjacent floor control unit to the central computer and would therefore not be lost.

As a result of this, losses of information are isolated as far as possible, so that in the event of a breakdown in a component in the system for whatever reason, the remainder of the system can continue to function.

Central computer 52 is, in turn, connected to various computer terminals or monitors indicated as 54 located wherever required in the facility. Typically, in a hotel, such terminals would be located at the front desk (at 54a), in the security office (at 54b) of the hotel, in the housekeeping office (at 54c) of the hotel, and in the accounting office (at 54d).

Where a separate maintenance department is maintained in the hotel then such a terminal (not shown) would also be located there.

Typically, the terminal in the accounting department will be itself connected to the accounting computer used in the hotel so as to automatically access relevant information as to check-ins, check-outs and the like.

The central computer 52 can be provided with a variety of different programs.

Thus, for example, one program permits a display of the various hotel rooms, by number, identifying rooms which are occupied by guests and those in which guests are at the time absent. A separate program or the same program indicates information as to which rooms are let and which rooms are not.

The same program or a separate program is used by the housekeeping department to indicate which rooms require major cleaning after a check-out, and which rooms require only minor cleaning when a guest is only temporarily out of a room. This particular program will also indicate a "false clean" in a manner yet to be explained where cleaning staff have reported that a room has been cleaned but, in fact, it has not.

Another program indicates the state of the heat sensors in the various rooms indicating those which are satisfactory and those which have failed. Another program indicates a forcible entry, and sets off emergency alarms. Another program reports on the operation of the heat exchanger 32, and ventilation unit 47, and indicates when they may require servicing. This may be done simply by checking the time required to produce a given heat rise. Thus, if a room when vacant is normally maintained at a temperature of say 50 degrees F, and when occupied is normally maintained at 70 degrees F, then the heat exchanger 32 should be able to produce a heat rise in the room of 20 degrees F, when a guest enters, in a predetermined time of say ten minutes.

If, however, the time taken by a particular heat exchanger to produce this heat rise gradually increases, then it will indicate the likelihood of a complete breakdown of that unit within the near future. This information can then be used by the hotel maintenance department so as to take preventative action before an actual breakdown occurs.

This will thus ensure that the hotel is not faced with a situation where after a room has been let, the heating system breaks down unexpectedly, and the guest then has to be relocated in another room, which may or may not be available at the time.

This program will also monitor the various sensors (not shown) in the HVAC units, and display warning signals on any unit which appears to be faulty.

During the normal progress of cleaning rooms, the cleaner will be present in the room, and will be detected by the presence detector 26. The unit 22 will know it is the cleaner, and not a guest, since the cleaner will have activated the exterior light 44. Upon completing cleaning of the room, the cleaner leaves and the presence detector signals accordingly. The housekeeping department will receive this information on its terminal from the central computer 52. This will immediately update the status of available rooms for renting to new guests. This information will also appear on the front desk terminal. In this way the use of the hotel rooms is maximized, since as soon as they are cleaned they are available for letting, and do not stand empty waiting for the completion of cleaning and the submission of the housekeeper's report. The cleaning supervisor can promptly check the rooms as they are reported cleaned, and can readily detect any deficiencies and correct the situation before it becomes a problem.

Referring now to Figure 3, there is illustrated in schematic form the arrangement of the room information processing unit 22 as it might be made in practice. It will be noted that, in this particular embodiment, the unit 22 incorporates the infra-red person presence sensor 26 and the temperature sensor 28. It is also possible for such sensors to be located separately from the unit 22.

All of the sensors are connected with an input/output interface 60. Interface 60 is connected to a fire test control 62. Interface 60 is also connected with a decoder 64 which is, in turn, connected to a micro-processor 66, and a room number memory 68.

An analog to digital converter 70 is also connected between interface 60 and micro-processor 66.

Micro-processor 66 is, in turn, connected with HVAC relays 72 for controlling the driver 34. Processor 66 is also connected to a transceiver 74 which is, in turn, connected to the display 40 of the unit 22 itself.

Micro-processor 66 is also connected to the unit key pad 38, and to the speaker 46.

A power supply 76 is provided, connected to the main power supply.

In this way, each room can be equipped with a unit 22, having all of the sensors, other than the door sensor 48, the security sensor 42 and the smoke detector 30, so as to minimize disturbance caused by running wires to various sensors throughout the room.

The foregoing is a description of a specific embodiment of the invention which is given here by way of example only. The invention is not to be taken as limited to any of the specific features as described, but comprehends all such variations thereof as come within the scope of the appended claims.

## Claims

1. A room information and control system for use in a multi-room facility and which comprises (a) for each room:
a room information processing unit (22);
a temperature-sensing means (28) connected to said room information processing unit (22) for sensing the temperature in said room;
a temperature control means (32) connected to said room information processing unit (22) for controlling the temperature of said room; and
a person presence-sensing means (26) connected to said room information processing unit (22) and adapted to provide a "person present" signal or a "person absent" signal thereto,
said room information processing unit (22) being responsive to a "person present" signal, to cause said temperature control means (32) to change the temperature in said room to a predetermined first value and being responsive to a "person absent" signal to cause said temperature control means (32) to change the temperature in said room to a predetermined second value, and
(b) a central processing means (52) adapted to be connected to a plurality of said room information processing units (22) for receiving information from each said unit (22).

2. A room information and control system as claimed in Claim 1 and in which each said room information processing unit (22) comprises a temperature display means located within a respective said room and adapted to display the temperature of said room.

3. A room information and control system as claimed in Claim 2 and in which each said room information processing unit (22) comprises a room temperature setting control (38) located within said room whereby the desired room temperature may be set to said predetermined first value.

4. A room information and control system as claimed in Claim 3 and and which additionally comprises for each room a heat-sensing means (30) connected to a respective said room information processing unit (22) and adapted to respond to an excessive temperature in said room to provide a "fire" signal to said unit (22), said unit (22) in turn being adapted to supply a "fire" signal to said central processing means (52).

5. A room information and control system as claimed in Claim 4 and which additionally comprises a testing means (31) adapted periodically to send a test signal to each said best-sensing means (30) and then to send a signal to said central processing means (30) identifying any such heat-sensing means which is not functioning properly.

6. A room information and control system as claimed in Claim 3 and which additionally comprises for each room a smoke-detecting means (30) connected to the respective said room information processing unit (22) and adapted to respond to the presence of smoke in said room to provide a "smoke present" signal to said unit (22), said unit (22) in turn being adapted to supply a "smoke present" signal to said central processing means (52).

7. A room information and control system as claimed in Claim 3 and which additionally comprises for each room a speaker (46) adapted to be mounted in said room and connected to said room information processing unit (22), said unit (22) in turn being connected through said central processing means (52) to message-sending means whereby messages may be sent to individual rooms or groups of rooms via said speakers (46).

8. A room information and control system as claimed in Claim 3 and which additionally comprises for each room a entry-sensing means (46) operable in response to forcible entry, to send a "forcible entry" signal to said room information processing unit (22), said unit (22) in turn being adapted to send a "forcible entry" signal to said central processing means (52).

9. A room information and control system as claimed in Claim 3 and which additionally comprises for each room a door position-sensing means (48) adapted to be connected to a door (14) of said room and operable in response to opening and closing of such a door (14) to send a door movement signal to said room information processing unit (22), said unit (22) in turn being adapted to send a door movement signal to said central processing means (52).

10. A room information and control system as claimed in Claim 3 and which additionally comprises for each room a "person-present" signalling means (44) adapted to be located exteriorly of said room to indicate the presence of a person in said room.

11. A room information and control system as claimed in Claim 3 and which additionally comprises a floor control unit (50) adapted to be connected to said room information processing units (22) of a plurality of rooms located on a given floor of the multi-room facility, said floor control unit (50), in turn, being connected to said central processing means (52).

12. A room information and control system as claimed in Claim 11 and which comprises a plurality of said floor control units (50) connected to said room information processing units (22) of respective floors of the multi-room facility.

13. A room information and control system as claimed in Claim 12 and in which each said floor control unit (50) is connected to said central processing means (52) not only directly but also through another said floor control means (50).

14. A room information and control system as claimed in Claim 3 and in which said central processing means (52) is adapted to display both the presence and absence of persons in respect of each room, but also the temperature of each said room.

15. A room information and control system as claimed in Claim 4 and in which said central processing means (52) is adapted to display the presence of a "fire" signal for any said room and to display the operative condition of said heat-sensing means (30) of each said room.

16. A room information and control system as claimed in Claim 3 and in which said room information processing unit (22) is adapted to indicate whether or not a respective said room has been cleaned.

17. A room information and control system as claimed in Claim 16 and in which said central processing means (52) is adapted to display the cleaning status of each said room.

FIG. 1

FIG. 2

FIG. 3